(19) Europäisches Patentamt
European Patent Office
Office européen des brevets

(11) Numéro de publication : **0 493 172 A1**

(12) **DEMANDE DE BREVET EUROPEEN**

(21) Numéro de dépôt : **91403370.9**

(22) Date de dépôt : **12.12.91**

(51) Int. Cl.⁵ : **C08K 5/00,** C08L 27/12, C08L 29/10

(30) Priorité : **21.12.90 FR 9016164**

(43) Date de publication de la demande : **01.07.92 Bulletin 92/27**

(84) Etats contractants désignés : **AT BE CH DE DK ES FR GB GR IT LI LU NL SE**

(71) Demandeur : **ELF ATOCHEM S.A.**
**4 & 8, Cours Michelet La Défense 10**
**F-92800 Puteaux (FR)**

(72) Inventeur : **Kappler, Patrick**
**4Bis Chemin de Fontville**
**F-69130 Ecully (FR)**
Inventeur : **Perillon, Jean-Luc**
**18 Lot Bois Taillefer**
**F-27300 Bernay (FR)**
Inventeur : **Boutevin, Bernard, Lotissement les Terres Blanches**
**Rue Anselme Mathieu**
**F-34000 Montpellier (FR)**
Inventeur : **Parisi, Jean-Pierre**
**3, Rue des deux Manses**
**F-34090 Montpellier (FR)**

(74) Mandataire : **Foiret, Claude et al**
**ELF ATOCHEM S.A. Département Propriété Industrielle La Défense 10 - Cedex 42**
**F-92091 Paris-La-Défense (FR)**

(54) **Composition à base de copolymère fluoré reticulable pour peintures et vernis.**

(57) 1 - Composition à base de copolymère fluoré réticulable constitué de :

a) un copolymère fluoré réticulable A contenant les restes d'unités récurrentes de tétrafluoroéthylène ($C_2F_4$) d'un éther allylique époxydé, et , de fluorure de vinylidène ($VF_2$) et/ou de chlorotrifluoroéthylène ($C_2F_3Cl$).

b) un photoamorceur B susceptible de libérer sous rayonnements UV ou électrons un acide de Lewis et de générer un proton $H^+$

c) éventuellement un composé C porteur de deux fonctions réactives choisies parmi les fonctions époxy, éther vinylique ou hydroxy, combinées ou non entre elles.

Cette composition est particulièrement adaptée pour les revêtements tels que peintures ou vernis.

EP 0 493 172 A1

La présente invention concerne une composition à base de copolymère fluoré réticulable par rayonnement ultra violet ou bombardement d'électrons.

Cette composition est constituée de :

a) un copolymère fluoré réticulable contenant les restes d'unités récurrentes de tétrafluoroéthylène ($C_2F_4$), d'un éther allylique époxydé, et, de fluorure de vinylidène (VF2 et/ou de chlorotrifluoroéthylène ($C_2F_3Cl$).

b) un photoamorceur B susceptible, en particulier sous l'action d'un rayonnement ou des électrons , de libérer un acide de Lewis et de générer un proton $H^+$.

c) éventuellement un composé C porteur de deux fonctions réactives choisies parmi les fonctions époxy, éther vinylique ou hydroxy combinées ou non entre elles.

Cette composition est particulièrement adaptée pour les revêtements tels que peintures et vernis.

Les polymères fluorés peuvent être utilisés comme matériau de base de peintures et vernis car ils apportent la tenue aux produits chimiques et au vieillissement, la résistance aux taches et à la température. Du fait de leur faible solubilité, leur mise en oeuvre n'est pas aisée et nécessite des quantités importantes de solvants, ou encore un traitement à une température supérieure à celle de leur point de fusion.

Pour remédier à ces inconvénients, différents types de polymères fluorés ont été proposés. Ces polymères sont généralement le résultat de la copolymérisation d'une oléfine fluorée et de monomères insaturés de type éther ou ester vinylique dont certains portent des groupements fonctionnels. Bien que plus solubles, ces polymères nécessitent toujours l'emploi de solvant dans leurs applications.

En outre ils doivent être combinés avec des durcisseurs et souvent traités à des températures élevées pour des temps de mise en oeuvre rapide. Dans le cas où on souhaite des mises en oeuvre à température ambiante, il est nécessaire de n'ajouter le durcisseur qu'au moment de l'emploi, ce qui nécessite un double emballage au stockage. Dans les FR 2597873 et EP 135917 sont décrits de tels polymères.

Selon l'invention, le temps de réticulation de la composition est accéléré à température ambiante, sans avoir recours aux composés solvants volatils indésirables, grâce au durcissement sous rayonnement. Sous l'effet du rayonnement ou des électrons, le photoamorceur B libère un proton $H^+$ qui initie une polymérisation cationique à laquelle participent les fonctions époxy du copolymère A et les fonctions réactives de l'éventuel composé C.

Des revêtements à base de copolymères fluorés époxydés sont décrits dans l'art antérieur. Dans le GB 2135327 est décrit un revêtement constitué d'un copolymère d'oléfine fluorée et d'éther vinylique pouvant contenir des fonctions époxy apportées par copolymérisation avec le glycidyle vinyléther. Dans le FR 2597873 est décrit un copolymère résultant de la copolymérisation d'au moins 25 % de $C_2F_3Cl$ avec un ester vinylique et l'allylglycidyle éther. Dans le EP 135917 est décrit un copolymère de $VF_2$, $C_2F_3Cl$, $C_2F_4$ et de comonomère $CF = CF - (CF_2)m - (CH_2)n - X$, X pouvant être une fonction époxy. Dans tous ces documents sont décrites des compositions pour revêtement à base de (co)polymère fluoré, de solvant et d'un agent de réticulation polyfonctionnel possédant une fonction réagissant avec la fonction époxy du (co)polymère fluoré. La réticulation est amorcée par chauffage à une température d'environ 100 à 150°C. Ce mode de réticulation par effet thermique présente l'inconvénient d'entraîner l'échauffement du substrat, ce qui est gênant dans le cas où ce dernier ne supporte pas ce traitement thermique comme dans le cas par exemple de substrats polymères. Le mode de réticulation décrit dans les documents cités nécessite également l'élimination du solvant qui représente une contrainte en ce qui concerne la sécurité et la pollution de l'environnement. Le mode de réticulation par rayonnement ne présente pas ces inconvénients.

Dans les documents JP 63301268, JP 01051418, JP 61296073, JP 63068604, JP 61243850, JP 61036374 le traitement de polymères fluorés par rayonnement est cité. Toutefois ce traitement ne concerne que des polymérisations radicalaires d'insaturations acryliques fixées sur la chaîne du polymère fluoré. Ces insaturations polymérisent par voie radicalaire sous l'effet d'un initiateur photosensible libérant des radicaux sous l'effet d'un rayonnement. Ces initiateurs sont des dérivés de la benzoïne, de la benzophénone, de l'antraquinone, de la thioxantone ou de l'acétophénone. Dans la formulation pour revêtements selon les techniques décrites dans ces documents, il est indispensable de faire appel à des diluants possédant des fonctions acryliques réactives.

Ces divers documents japonais se distinguent par la façon d'introduire les insaturations dans la chaîne de polymère fluoré. Selon les JP 63301268 et JP 61296073, il s'agit de la réaction d'un polymère hydroxylé avec un composé bifonctionnel possédant deux extrémités réactives : isocyanate et acrylique. Selon le JP 01051418, il est fait appel à la réaction d'un copolymère fluoré hydroxylé avec un acide carboxylique $\alpha$ $\beta$ insaturé. Selon le JP 61036374, il s'agit d'une réaction d'un polymère fluoré hydroxylé avec un diisocyanate puis avec un hydroxyacrylate. Enfin dans le JP 63068604 un polymère fluoré époxydé est modifié par réaction avec un acide carboxylique $\alpha$ $\beta$ insaturé.

Par rapport au mode de réticulation par polymérisation cationique, selon l'invention, des polymères fluorés époxydés, le mode de polymérisation par voie radicalaire de polymère fluoré possédant des insaturations présente plusieurs inconvénients majeurs. Les insaturations ne peuvent pas être obtenues directement par copolymérisation. Les réactions chimiques de modification de fonctions représentent une étape supplémentaire difficile. En outre, les insaturations acryliques sont sensibles à l'oxygène au cours de la polymérisation, ce qui provoque des inhibitions ou des retards du durcissement caractérisés par un collant en surface. Enfin les liaisons interchaînes du type polyacrylique n'assurent pas au revêtement une stabilité dimensionnelle aussi bonne que les liaisons du type polyépoxy.

Dans le mélange pondéral A + B, le photoamorceur B représente 1 à 10 % du mélange.

Le copolymère A contient les restes de copolymérisation de tétrafluoroéthylène ($C_2F_4$), d'un éther allylique époxydé, de $VF_2$ et/ou de $C_2F_3Cl$. A ces composés de base, il n'est pas exclu que ce copolymère A puisse contenir les restes de copolymérisation d'éther vinylique non fonctionnel.

Généralement dans ce copolymère fluoré époxydé A, pour 100 moles de restes de copolymérisation de $C_2F_4$,$VF_2$ et/ou $C_2F_3Cl$, les restes de $C_2F_4$ représentent de 25 à 55 moles et la somme des restes de $VF_2$ + $C_2F_3Cl$ représente de 75 à 45 moles. Les restes de copolymérisation d'éther allylique époxydé représentent 4 à 25 moles pour 100 moles de restes de $C_2F_4$, $VF_2$ et/ou $C_2F_3Cl$. Si un éther vinylique non fonctionnel entre dans la composition du copolymère A, ses restes de copolymérisation représentent moins de 60 moles pour 100 moles de restes de $C_2F_4$,$VF_2$ et/ou $C_2F_3Cl$. Ce copolymère A possède de préférence une masse moléculaire en nombre mesurée par chromatographie l'exclusion stérique (GPC) après dissolution dans la diméthylformamide, à température ambiante de 1000 à 10000. Ces mesures GPC sont réalisées sur un dispositif à 2 colonnes WATERS microstyragel $10^4$ nm, $10^5$ nm, calibré par des étalons polystyrène. La détection est assurée par un réfractomètre.

L'éther allylique époxidé entrant dans la composition du copolymère A répond généralement à la formule :

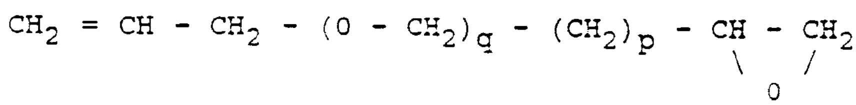

avec q = 1 à 4 et p = 0 à 4

Lorsqu'un éther vinylique non fonctionnel entre dans la composition de ce copolymère A, il répond habituellement à la formule $CH_2 = CH - O - R$ dans laquelle R est un radical alkyl linéaire ou ramifié contenant de 2 à !8 atomes de carbone ou encore un radical cyclique.

Comme déjà indiqué le photoamorceur B est un composé qui sous l'effet d'un rayonnement ultra violet ou d'électron, libère des acides de Lewis ou de Bronstead selon le mécanisme suivant :

$$Ar_3\,S^+, X^- \underline{UV} \rightarrow Ar_2S^{+\cdot} + Ar\cdot + X^-$$

ou

$$e\text{-}\ Ar_2S^{+\cdot} + RH \rightarrow Ar_2S + R\cdot + H^+$$

dans lequel RH représente un donneur de proton présent dans le milieu, par exemple un composé hydroxylé et Ar représente un radical aryl.

Parmi les photoamorceurs les plus efficaces peuvent être cités les sels d'onium et en particulier :

– les sels d'aryldiazonium

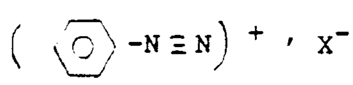

– les sels de diaryliodonium $Ar_2I^+$, X- Ar étant un radical aryl

– les complexes ferreux des sels d'onium :

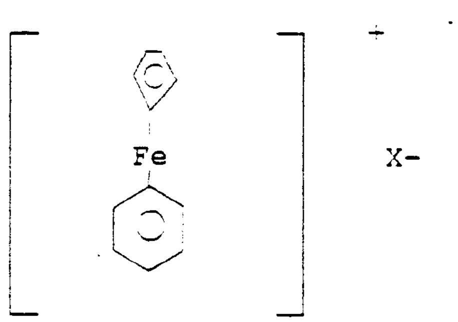

– les sels de sulfonium

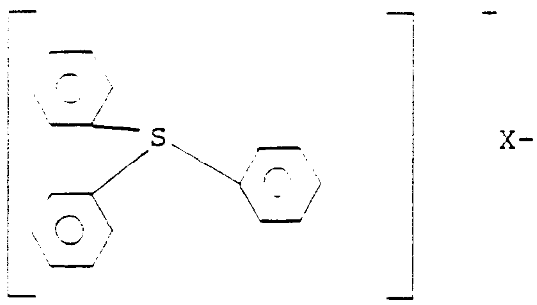

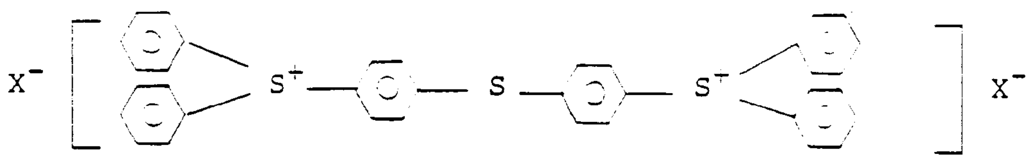

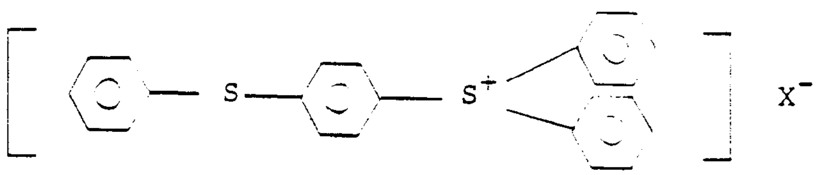

Dans cette catégorie les composés préférés sont le triarylsulfonium hexafluoroantimonate et le triarylsulfonium hexafluorophosphate.

– les sels de triarylsélénonium

$$Ar_3\ Se^+, X^-$$

Ar étant un radical aryl éventuellement substitué

– le composé chloré

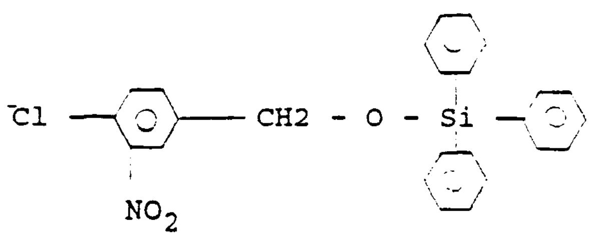

X $^-$représente dans tous ces composés un anion du type $PF_6^-$, $BF_4^-$, $AsF_6^-$, $SbF_6^-$, $FeCl_4^-$, $SbCl_6^-$,.....

Les radicaux aryl précédents sont généralement des radicaux phényl. Ces radicaux aryl sont éventuellement substitués par un radical alkyl linéaire ou ramifié possédant de 1 à 12 atomes de carbone.

Le composé C entrant éventuellement dans la composition à base de copolymère fluoré réticulable sert de diluant réactif et possède deux fonctions réactives par molécule choisies parmi les groupements époxyde, éther vinylique, hydroxyle combinés ou non entre eux.

La structure générale du composé C est X-D-X ou X-D-Y, X et Y représentent des groupements réactifs hydroxyle (-OH), éther vinylique ($-O-CH=CH_2$), epoxyde

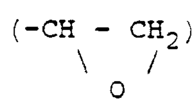

ou cycloépoxide

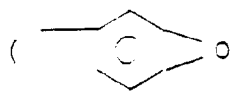 ou 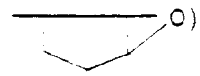

D est un groupement non réactif généralement constitué par des motifs

$$-CH_2-,\ -\underset{\displaystyle CH_3}{\underset{|}{CH}}-,-\ OCH_2\ -$$

ou par une combinaison de ceux-ci, destinés simplement à éloigner les deux groupements réactifs situés aux extrémités.

La masse moléculaire du composé C doit être supérieure à 64.

Le composé C peut entrer dans la composition jusqu'à 100 % en poids du mélange des composés A + B.

Le composé C est habituellement choisi parmi :

– le butane diol ou l'hexane diol

– le diglycidyléther du bisphénol A ou les composés de formule :

$$CH_2 = CH\text{-}0\text{-}(CH_2)_4\text{-}O\text{-}CH{=}CH_2$$

$$CH_2 = CH\text{-}O\text{-}CH_2\text{-}CH_2\text{-}O\text{-}(CH_2)_4\text{-}O\text{-}CH_2\text{-}CH_2\text{-}O\ \text{-}CH{=}CH_2$$

$$CH_2 = CH\text{-}0\text{-}(CH_2\text{-}CH_2\text{-}O)_2\text{-}(CH_2)_4\text{-}(O\text{-}CH_2\text{-}CH_2)_2\text{-}0\text{-}CH = CH_2$$

$$CH_2\ =\ CH{-}0{-}(\underset{\displaystyle CH_3}{CH}{-}CH_2{-}0)_3{-}CH{=}CH_2$$

$$CH_2\ =\ CH{-}0{-}(CH_2{-}CH_2{-}0){-}CH{=}CH_2$$

– le 2-hydroxyéthylvinyléther, le 2-3-époxyéthylvinyléther, le vinylglycidyléther, le 3,4-époxycyclohexylméthyl,-3',4'-époxycyclohexane carboxylate.

A la composition à base de copolymère fluoré réticulable selon l'invention peuvent être associés tous les additifs habituels aux peintures et vernis tels que charges, pigments, agents d'adhésion, agents mouillants ou d'étalement, stabilisants à condition qu'ils ne soient pas en eux-même inhibiteurs de polymérisation cationique.

Cette composition peut être appliquée selon toute technique connue par exemple à la brosse, au rouleau, au pistolet, ou trempé ou au défilé.

Elle peut servir au revêtement de la plupart des supports comme les métaux, le bois, le papier, le verre, les céramiques, les matières plastiques.

Le copolymère fluoré A selon l'invention est habituellement obtenu selon le procédé connu de polymérisation en solution. Le procédé consiste à copolymériser les monomères en milieu solvant en présence d'un initiateur organosoluble, à une température comprise entre environ 30 et 120°C et de préférence entre 40 et 80°C sous une pression d'environ 10 à 80 bars et de préférence entre 15 et 40 bars. Ce copolymère fluoré époxydé A est obtenu par copolymérisation de tétrafluoroéthylène, d'un éther allylique époxydé tel que défini précédemment, et de fluorure de vinylidène et/ou de chlorotrifluoroéthylène. Eventuellement, à ces monomères, peut être associé un éther vinylique non fonctionnel tel que défini précédemment. Habituellement pour 100 moles de $C_2F_4$,$VF_2$ et/ou $C_2F_3Cl$ la répartition de ces monomères fluorés est de 25 à 55 moles de $C_2F_4$ pour 75 à 45 moles de $VF_2$ + $C_2F_3Cl$, et à ces 100 moles de monomères fluorés sont associés 4 à 25 moles d'éther allylique époxydé.

Lorsqu'éventuellement un éther vinylique non fonctionnel est associé au milieu de polymérisation, ce monomère complémentaire représente moins de 60 moles pour 100 moles de la combinaison des monomères fluorés de base $C_2F_4$,$VF_2$ et/ou $C_2F_3Cl$.

Selon un mode de copolymérisation préféré, le solvant est chauffé à la température de réaction choisie dans un réacteur agité préalablement dégazé. Un mélange de monomères fluorés ainsi qu'une fraction initiale d'éther allylique et éventuellement de l'éther vinylique non fonctionnel sont introduits dans le réacteur.

La quantité de mélange de monomères à introduire pour atteindre le pression de réaction choisie dépend des conditions de solubilité de tous les monomères fluorés dans le solvant choisi. Le rapport pondéral de tous

les monomères fluorés sur le solvant est en général compris entre 0,1 et 1.

Lorsque la pression de réaction et la température de réaction sont atteintes, on introduit dans le réacteur l'initiateur de polymérisation. La formation de copolymère se traduit par une baisse de pression que l'on compense par l'ajout de mélange des monomères fluorés entrant dans la composition du mélange réactionnel.

On peut ajouter un mélange de monomères fluorés de composition molaire identique à celle que l'on a introduite-au départ. On peut également tenir compte des réactivités propres de chaque monomère et ajuster la composition du mélange ajouté au cours de la polymérisation pour faire un copolymère homogène en composition.

L'éther allylique et éventuellement l'éther vinylique non fonctionnel peuvent également être ajoutés en cours de polymérisation. Ils peuvent également être ajoutés en mélange ou séparément, en association ou non aux ajouts de monomères fluorés.

L'éther allylique et éventuellement l'éther vinylique non fonctionnel sont ajoutés, de telle sorte que la composition du mélange de monomères fluorés et d'éther allylique et éventuellement de l'éther vinylique non fonctionnel reste constante pendant toute la durée de la polymérisation.

L'ajout du mélange de monomères fluorés pour maintenir la pression est poursuivi suffisamment longtemps pour atteindre un extrait sec de l'ordre de 10 à 60 %, de préférence de 15 à 40 %.

Les réactifs résiduaires volatils peuvent être éliminés par dégazage. Le copolymère obtenu est séparé du solvant du milieu de polymérisation par tout moyen connu.

Les solvants choisis pour la réaction de copolymérisation doivent permettre de solubiliser le mélange des monomères tout en restant inertes vis à vis des autres composants réactionnels. Ils sont choisis de préférence parmi les acétates et les alcools. Parmi les acétates préférés, l'acétate de butyle, d'isobutyle et d'éthyle sont particulièrement retenus. Parmi les alcools préférés, sont cités le méthanol et le tertiobutanol.

Les initiateurs de copolymérisation sont connus en eux-mêmes, les plus courants étant choisis parmi les initiateurs de polymérisation radicalaire comme les perdicarbonates, les perpivalates et les composés azo, tels que le percarbonate de diisopropyle et de dicyclohexyle, le perpivalate de tertiobutyle ou de tertioamyle, l'azobisisobutyronitrile et l'azo-bis-2,2-diméthylvaléronitrile.

La composition du copolymère fluoré A est déterminée par résonnance magnétique nucléaire (RMN) du fluor pour ce qui concerne les monomères fluorés. La teneur en époxy est déterminée par dosage chimique en milieu pyridine et HCl à 100°C. L'HCl ouvre le pont époxy pour donner de l'épichloridrine. l'excès de chlore est dosé par argentimétrie potentiométrique avec le couple calomel/argent.

La composition A + B éventuellement additionnée de C est obtenue par simple mélange des différents constituants. D'une manière habituelle le composant A, éventuellement additionné de C, est introduit dans un récipient muni d'un agitateur, puis, le photoamorceur B est ajouté sous agitation.

La composition selon l'invention peut être réticulée sous rayonnement UV. A titre d'exemple, on peut faire défiler le support enduit sous un illuminateur UV du type MINICURE-PRIMARC muni de deux lampes à mercure moyenne pression de 1800 watts chacune. A chaque passage, l'enduit reçoit une énergie moyenne de 2700 $J/m^2$. Après chaque passage, il est possible de vérifier le degré de réticulation du revêtement par l'essai d'aller retour à la méthyléthylcetone. Selon cet essai, un coton imbibé de méthyléthylcétone est frotté dans un mouvement d'aller retour sur le revêtement jusqu'à apparition du support. Un nombre d'allers retours supérieur à 50 permet de considérer le revêtement comme bon, et, excellent lorsqu'il atteint la valeur de 100.

Le brillant spéculaire à 85° est mesuré selon la norme ASTM D523 85. La dureté est appréciée selon la norme ASTM D3363 74.

La résistance au tachage par le feutre et évaluée de la manière suivante : le film réticulé est marqué sur une surface de 4 $cm^2$ au moyen d'un feutre indélébile, noir de marque "Pentell". Après 2 mois de contact à température ambiante la souillure est enlevée au moyen d'un coton imbibé de méthyléthylcétone et la cotation suivante est adoptée:

O : pas de traces visibles

1 : traces visibles à moins de 1 mètre

2 : traces visibles à plus de 1 mètre

Les exemples suivants illustrent l'invention sans toutefois la limiter.

**EXEMPLE 1**

Dans un autoclave de 3,3 l muni d'un système d'agitation efficace, on introduit après dégazage sous vide 2 l de tertiobutanol et 20 g d'allylglycidyléther puis 215 g de $VF_2$ et 84 g de $C_2F_4$.

On élève la température de l'autoclave à 70 °C et on ajoute 5g de perpivalate de tertiobutyle. La pression est maintenue à 20 bars en introduisant au cours de la copolymérisation 92 g d'un mélange $VF_2/C_2F_4$ dans les

proportions molaires 65/35. Au cours de la polymérisation, on introduit 28 g d'allylglycidyléther. Après 2h10 de réaction, l'autoclave est refroidi et les monomères fluorés résiduaires sont dégazés.

Le produit de la copolymérisation est distillé à 90°C sous vide poussé de manière à éliminer le tertiobutanol et l'éther allylique qui n'a pas réagi. On récupère 120 g de copolymère. L'analyse RMN du fluor montre que le rapport en $VF_2/C_2F_4$ est en proportion molaire de 64/36. Le dosage chimique des fonctions époxy donne une valeur de 1,5 milliéquivalent par gramme, ce qui correspond 14 moles d'allylglycidyléther fixées pour 100 moles de la somme des moles de $VF_2$ et de $C_2F_4$. La masse moléculaire en nombre mesuré par GPC est de 2500.

A partir de ce copolymères ont été préparées les deux compositions suivantes I et II :

la composition I est constituée par le mélange de

- 30 g de copolymère fluoré époxydé
- 1,4 g de triphénylsulfonium hexafluoroantimonate
- 15,2 g d'hydroxyvinyléther

la composition II est constituée par le mélange de :

- 30 g de copolymère fluoré époxydé
- 1,22 g de triphénylsulfonium hexafluoroantimonate
- 10,6 g de 3,4 époxycyclohexylméthyl-3′,4′époxycyclo-hexanecarboxylate.

La composition I est appliquée sur une plaque d'aluminium dégraissée d'épaisseur de 0,2 mm au moyen d'un raclet spirale pour donner un film humide de 40 µm puis est soumise à 4 passages sous l'illuminateur UV précédemment décrit.

La composition II est appliquée sur une plaque en polyamide d'épaisseur de 3 mm au moyen d'un raclet spirale permettant de réaliser un film de 40 microns, puis est soumise à 6 passages sous l'illuminateur UV.

On obtient des revêtements transparents dont les caractéristiques figurent dans le tableau en annexe.

## EXEMPLE 2

Dans un autoclave de 3,3 l muni d'un agitateur efficace, on introduit après dégazage sous vide 2 l de tertiobutanol, 40 g d'allylglycidyléther, 128 g de $VF_2$, 35 g de $C_2F_3Cl$ et 195 g de $C_2F_4$. On élève la température de l'autoclave à 70°C et on ajoute 5g de perpivalate de tertiobutyle.

La pression est maintenue à 20 bars par introduction au cours de la polymérisation de 326 g d'un mélange $VF_2/C_2F_4/C_2F_3Cl$ de composition molaire 37/38/25.

Au cours de la polymérisation, on introduit également 70 g d'allylglycidyléther et 15 g de perpivalate de tertiobutyle. Après 5h de polymérisation, l'autoclave est refroidi, Les monomères fluorés résiduaires sont dégazés.

Le résidu de polymérisation est distillé à 90°C sous vide poussé de façon à éliminer le solvant ainsi que l'éther allylique qui n'a pas réagi. Il reste 394 g de copolymère après distillation. L'analyse RMN de ce polymère montre que le rapport en $VF_2/C_2F_4/C_2F_3Cl$ est en proportion molaire de 36/39/25. Le dosage chimique des fonctions époxy donne une valeur de 1,3 meq/g, ce qui correspond à 14 moles d'allylglycidyléther pour 100 moles de monomères fluorés $VF_2 + C_2F_4 + C_2F_3Cl$. La masse moléculaire en nombre mesurée par GPC, est de 3800.

A partir de ce copolymère, 4 compositions ont été préparées : III, IV, V, VI.

La composition III est constituée par le mélange de :

- 20,1 g du copolymère fluoré époxydé
- 1,25 g de triphénylsulfonium hexafluoroantimonate
- 19,5 g de 3,4 époxycyclohexylméthyl-3′,4′ époxy cyclohexanecarboxylate

La composition IV est constituée par le mélange de :

- 32,6 g de copolymère fluor époxydé
- 1,3 g de sel de triphénylsulfonium hexafluoroantimonate
- 10,8 g de 3,4 époxycyclohexylméthyl-3′,4′ époxycyclohexanecarboxylate

La composition V est constituée par le mélange suivant :

- 30 g de copolymère fluoré époxydé
- 1,23 g de triphénylsulfonium hexafluoroantimonate
- 10,23 g de diglycidyléther de bisphénol A.

La composition VI est constituée par le mélange de :

- 100 g de copolymère fluoré époxydé
- 4,5 g de triphénylsulfonium hexafluoro-antimonate.

La composition III est appliquée sur une plaquette de bois de sapin d'épaisseur de 1 cm au moyen d'un raclet spirale permettant de faire un film de 25 µm. Il est soumis à 4 passages à l'illuminateur UV.

Les compositions IV et V sont appliquées sur une plaquette en aluminium chromaté dégraissée d'épaisseur de 0,8 mm avec un raclet spiralé permettant de faire un film d'épaisseur de 40 µm. Il est ensuite soumis à 6

passages sous l'illuminateur.

La composition VI est appliquée sur une plaquette en aluminium dégraissée d'épaisseur de 0,2 mm au moyen d'un raclet spirale permettant de réaliser un film de 70 µm. Il est soumis à 2 passages sous l'illuminateur UV.

Les compositions III, IV et VI donnent des films transparents. La compositin V donne un film légèrement voilé. Les caractéristiques de tous ces films sont données dans le tableau en annexe.

On obtient dans tous les cas un film transparent dont les caractéristiques figurent dans le tableau en annexe.

## EXEMPLE 3

Dans un autoclave de 3,3 l muni d'un moyen d'agitation efficace, on introduit après dégazage sous vide 2 l de tertiobutanol et 30 g d'allyglycidyléther puis 215 g de $VF_2$, 84 g de $C_2F_4$ et 46 g de butylvinyéther.

On élève la température de l'autoclave à 70 °C et on ajoute 15 g de perpivalate tertiobutyle. La pression est maintenue à 20 bars par introduction au cours de la copolymérisation de 220 g d'un mélange $VF_2/C_2F_4$ dans la proportion molaire 65/35. Au cours de la polymérisation, on introduit 56 g d'allylglycidyléther, 34 g de butylvinyléther et 22 g de perpivalate de tertiobutyle. Après 6 h de réaction l'autoclave est refroidi et les monomères fluorés dégazés.

Le produit de la copolymérisation est ensuite distillé à 90°C sous vide poussé de manière à éliminer le tertiobutanol et les éthers allylique et vinylique qui n'ont pas réagi. On récupère 350 g de copolymère.

L'analyse RMN du fluor montre que le rapport molaire en $VF_2/C_2F_4$ est de 64/36.

Par analyse RMN le taux de butylvinyléther incorporé dans le copolymère est de 25 moles pour 100 moles de la somme des moles de $VF_2$ et $C_2F_4$. Le dosage chimique des fonctions époxy donne une valeur de 1,04 milliéquivalent par gramme, ce qui correspond à 12 moles d'allylglycidyléther fixées pour 100 moles de la somme des moles de $VF_2$ et de $C_2F_4$.

La masse moléculaire en nombre mesurée par GPC est de 4000.

A partir de ce copolymère, la composition VII est constituée par le mélange de :

– 30 g du copolymère fluoré époxydé
– 1,25 g de triphénylsulfonium hexafluoroantimonate
– 10,0 g de vinylglycidyléther.

Cette composition est appliquée sur une plaque d'aluminium chromaté dégraissée d'épaisseur de 0,8 mm au moyen d'un raclet spiral pour donner au film une épaisseur de 40 µ. Après 6 passages sous l'illuminateur UV, on obtient un film transparent dont les caractéristiques sont données dans le tableau en annexe.

## EXEMPLE 4:

Dans un autoclave de 3,3 l muni d'un agitateur efficace, on introduit après dégazage sous vide, 2 l de tertiobutanol et 50 g d'allylglycidyléther, 280 g de $C_2F_3Cl$, 240 g de $C_2F_4$ et 63 g de butylvinyléther. On élève la température à 70 °C et on ajoute 15 g de perpivalate de tertiobutyle.

La pression est maintenue à 15 bars par l'introduction au cours de la copolymérisation de 360 g d'un mélange $C_2F_4/C_2F_3Cl$ de composition molaire 50/50.

On introduit également 63 g de butylvinyléther et 75 g d'allylglycidyléther tout au long de la copolymérisation.

Après 6h de polymérisation, l'autoclave est refroidi, les monomères fluorés résiduaires sont dégazés. Le résidu de polymérisation est distillé à 90°C sous vide poussé de façon à éliminer le solvant ainsi que l'allylglycidyléther et le butylvinyléther n'ayant pas réagi. Il reste 590 g de copolymère après distillation. L'analyse RMN du copolymère montre que le rapport en $C_2F_4/C_2F_3Cl$ est de 52/48 et que le taux en butylvinyléther est de 32 moles pour 100 moles de $C_2F_4$ + $C_2F_3Cl$. Le dosage chimique des fonction époxy donne une valeur de 1,25 meq/g ce qui correspond à 20,5 moles d'allylglycidyléther pour 100 moles de $C_2F_4$ + $C_2F_3Cl$.

La masse moléculaire en nombre mesuré par GPC est de 5000.

A partir de ce copolymère on prépare deux compositions. La composition VIII est obtenue par mélange de :

– 30 g de copolymère fluoré époxydé
– 1,5 g de sel de triphénylsulfonium hexafluoroantimonate.

Ce mélange est appliqué sur une plaque d'aluminium dégraissée de 0,2 mm d'épaisseur au moyen d'un raclet spiralepermettant de réaliser un film de 40 µm d'épaisseur. Il est ensuite soumis à 4 passages sous l'illuminateur UV. La composition IX est préparée par mélange de :

– 30 g de copolymère fluoré époxydé,

– 1,5 g de triphénylsufonium hexafluorophosphate.

Ce mélange est appliqué sur une plaque d'aluminium dégraissé de 0,7 mm d'épaisseur au moyen d'un raclet spirale permettant de réaliser un film de 40 µm d'épaisseur. Il est ensuite soumis à 4 passages sous l'illuminateur UV.

On obtient dans les deux cas un film transparent dont les caractéristiques sont données dans le tableau en annexe.

**EXEMPLE 5:**

Dans un autoclave de 3,3 l muni d'un moyen d'agitation efficace, on introduit après dégazage sous vide 2 l de tertiobutanol et 41,5 g de composé $CH_2 = CH - CH_2 - O - CH_2 - CH_2 - O - CH_2 -$

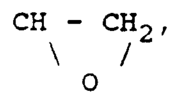

215 g de $VF_2$, 84 g de $C_2F_4$ et 46 g de butylvinyléther.

On élève la température de l'autoclave à 70°C et on ajoute 15 g de perpivalate de tertiobutyle. La pression est maintenue à 20 bars par introduction en cours de copolymérisation de 230 g d'un mélange $VF_2/C_2F_4$ dans la proportion molaire 65/35.

Au cours de la copolymérisation on introduit 78 g de composé $CH_2 = CH - CH_2 - O - CH_2 - CH_2 - O - CH_2 -$

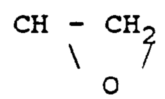

et 34 g de butylvinyléther ainsi que 22 g de perpivalate de tertiobutyle.

Après 6 h de réaction l'autoclave est refroidi et les monomères fluorés dégazés.

Le produit de la copolymérisation est ensuite distillé à 90° sous vide de manière à éliminer le tertiobutanol ainsi que les éther vinyliques et allyliques n'ayant pas réagi. On récupère 403 g de copolymère.

L'analyse RMN donne un rapport molaire en $VF_2/C_2F_4$ de 65/35. L'analyse par RMN donne un taux de butylvinyléther incorporé dans le copolymère de 25 moles pour 100 moles de la somme de $VF_2$ et $C_2F_4$.

Le dosage chimique des fontions époxy donne une valeur de 1,13 par gramme ce qui correspond à 14 moles de $CH_2 = CH - CH_2 - O - CH_2 - CH_2 - O - CH_2 -$

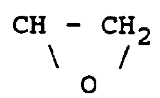

fixés pour 100 moles de la somme des moles de $VF_2$ et $C_2F_4$.

La masse moléculaire en nombre mesurée par GPC est de 4200.

La composition X est préparée par mélange de :

– 35 g de copolymère fluoré époxydé,

– 1,7 g de triphénylsulfonium hexafluoroantimonate

– 10 g de 3,4-époxycyclohexylméthyl-3'4'-epoxycyclohexane carboxylate.

Cette composition est appliquée sur une plaquette d'aluminium de 0,7 mm au moyen d'un raclet spirale permettant d'obtenir un film de 40 µm. Il est soumis à 4 passages sous l'illuminateur UV.

On obtient un film transparent dont les caractéristiques figurent dans le tableau annexe.

| | Référence de la composition | Dureté crayon ASTM D3363-74 | Brillance spéculaire ASTM D 523-85 | Nombre Allers retours à la méthyléthylcétone | tachage au feutre |
|---|---|---|---|---|---|
| Exemple 1 | I<br>II | F<br>F | 80 %<br>75 % | > 100<br>75 | 1<br>0 |
| Exemple 2 | III<br>IV<br>V<br>VI | F<br>2H<br>F<br>HB | 89 %<br>86 %<br>61 %<br>81 % | > 100<br>> 100<br>> 100<br>> 100 | 0<br>0<br>1<br>0 |
| Exemple 3 | VII | F | 92 % | > 100 | 1 |
| Exemple 4 | VIII | F | 65 % | 75 | 0 |
| Exemple 4 | IX | F | 63 % | 75 | 0 |
| Exemple 5 | X | H | 80 % | > 100 | 0 |

## Revendications

1. Composition à base de copolymère fluoré réticulable constitué de :
   a) un copolymère fluoré réticulable A contenant les restes d'unités récurrentes de tétrafluoroéthylène ($C_2F_4$), d'un éther allylique époxydé, et, de fluorure de vinylidène ($VF_2$) et/ou de chlorotrifluoroéthylène ($C_2F_3Cl$).
   b) un photoamorceur B susceptible de libérer sous rayonnements UV ou électrons un acide de Lewis et de générer un proton $H^+$ sous l'effet d'un rayonnement.
   c) éventuellement un composé C porteur de deux fonctions réactives choisies parmi les fonctions époxy, éther vinylique ou hydroxy, combinées ou non entre elles.

2. Composition selon la revendication 1 caractérisée en ce que la quantité en poids de photoamorceur représente 1 à 10 % du mélange A + B.

3. Composition selon l'une des revendications 1 ou 2 caractérisée en ce que dans le copolymère A, pour 100 moles de restes de $C_2F_4$,$VF_2$ et/ou $C_2F_3Cl$, le reste de $C_2F_4$ représente 25 à 55 moles et la somme des restes de $VF_2$ + $C_2F_3Cl$ représentent 75 à 45 moles.

4. Composition selon l'une des revendications 1 à 3 caractérisée en ce que dans le copolymère A, les restes d'éther allylique époxydé représentent 4 à 25 moles pour 100 moles de restes de $C_2F_4$,$VF_2$ et/ou $C_2F_3Cl$.

5. Composition selon l'une des revendications 1 à 4 caractérisée en ce que le copolymère A contient les restes de copolymérisation d'éther vinylique non fonctionnel.

6. Composition selon la revendication 5 caractérisée en ce que le copolymère A contient moins de 60 moles des restes de copolymérisation d'éther vinylique non fonctionnel.

7. Composition selon l'une des revendications 1 à 6 caractérisée en ce que le photoamorceur B est choisi parmi les sels d'onium.

8. Composition selon l'une des revendications 1 à 7 caractérisée en ce que le composé C peut représenter jusqu'à 100 % en poids du mélange de composés A + B.

9. Revêtements constitués de composition selon l'une des revendications 1 à 8.

Office européen des brevets

# RAPPORT DE RECHERCHE EUROPEENNE

Numero de la demande

EP 91 40 3370

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A,D | GB-A-2 135 327 (ASAHI GLASS)<br>* page 1, ligne 5 - ligne 9 *<br>* page 1, ligne 84 - ligne 97 *<br>* revendications 1-3,5 *<br>--- | 1 | C08K5/00<br>C08L27/12<br>C08L29/10 |
| A | EP-A-0 396 444 (ATOCHEM)<br>* page 2, ligne 1 - ligne 5 *<br>----- | 1,9 | |
| | | | **DOMAINES TECHNIQUES RECHERCHES (Int. Cl.5 )** |
| | | | C08K<br>C08L<br>C09D |

Le présent rapport a été établi pour toutes les revendications

| Lieu de la recherche | Date d'achèvement de la recherche | Examinateur |
|---|---|---|
| LA HAYE | 20 MARS 1992 | SIEMENS T. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)